# NEW EUROPEAN PATENT SPECIFICATION

(11) **EP 2 791 030 B2**
(45) Date of publication and mention of the opposition decision: **20.08.2025**
(45) Mention of the grant of the patent: 18.05.2016
(21) Application number: 12850745.6
(22) Date of filing: 05.12.2012
(51) Int. Cl.: B29K 101/00, B29D 22/00, B29C 49/02, B65D 8/00, B65D 6/10, B65D 6/34, B65D 83/62, B65D 83/38, B65D 83/42, B65D 83/64

(54) **PLASTIC CONTAINER FOR PACKING OF FILLING PRODUCT UNDER PRESSURE, AND METHOD FOR THE MANUFACTURE THEREOF**
KUNSTSTOFFBEHÄLTER ZUM VERPACKEN VON FÜLLGUT UNTER DRUCK UND VERFAHREN ZU SEINER HERSTELLUNG
RÉCIPIENT EN MATIÈRE PLASTIQUE POUR LE CONDITIONNEMENT DE PRODUIT D'UN REMPLISSAGE SOUS PRESSION, ET PROCÉDÉ POUR LA FABRICATION DE CELUI-CI

(30) Priority: 05.12.2011 BE 201100705; 10.10.2012 BE 201200681
(43) Date of publication of application: 22.10.2014
(60) Divisional application: 16001088.0
(73) Proprietor: TRADIDEC NV, 9070 Destelbergen (BE)
(72) Inventor: DE CUYPER, Dirk, B-9070 Destelbergen (BE); DIERICKX, William, B-9070 Destelbergen (BE)
(74) Representative: V.O.
(86) International application number: PCT/BE2012/000053
(87) International publication number: WO 2013/082680

(56) References cited:
- EP-A2- 0 778 225
- WO-A1-2005/071306
- WO-A1-2007/051229
- WO-A2-2004/065217
- DE-A1- 102006 004 120
- FR-A1- 2 852 301
- US-A- 2 766 072
- US-A- 2 799 435
- US-A- 2 799 435
- US-A- 3 327 907
- US-A- 3 837 527
- US-A- 4 039 103
- US-A- 4 988 399
- US-A- 5 465 856
- US-A- 5 865 350
- US-A- 553 753
- US-B1- 6 484 900

## Description

### Field of the invention

The present invention relates to a method for manufacturing a container which is intended for the packaging under pressure of a filling product, in particular fluids, i.e. liquids or gases, or semi-liquids, such as pastes, creams, gels and the like, wherein the pressure container has a reinforced body.

### Background of the invention

Plastic pressure containers reveal some advantages compared with those made from metal, i.a. respective environment and durability, owing to a lower cost in energy and transport, resulting in a reduced CO₂ emission. Moreover, they are non-corrosive, have a lower weight and may be transparent if required. Conversely, however, they may get slightly deformed under the action of pressure, which is not desired in most cases.

As a result, pressure containers made from plastic bodies are restricted to allowable pressures, which they must be able to resist indeed, in order to ensure safe working. In order to cope with possible incidents resulting from the acting pressure, pressure containers were first proposed with a relatively thick wall, resulting in both a higher weight and a higher cost for such containers.

To remedy this, a reinforced container was proposed as disclosed in US 3 837 527 of KUTIC, wherein a container is described which has a body with a thinner wall thanks to a reinforced construction thereof. It consists essentially in a reinforcing ribs pattern which is rather complex. This consists of a set of radial reinforcing ribs indeed, which extend over the major part of the length of the container between an outer wall and an additional inner wall. This has the disadvantage however that the gain achieved in terms of weight of the outer wall thanks to its thinner design is counterbalanced by the additional material required for the additional inner wall and the numerous radial reinforcing ribs. The pressure container described herein consists of a highly complex wall structure in which a double wall is joined by radial ribs. The result is that the container thus obtained has virtually the same weight, with the additional disadvantage of a rather extensive and complex reinforcing rib structure.

### State of the art

Document US 3,327,907 of Charles MEYERS likewise describes a reinforced plastic container for products under pressure. Similarly, the reinforcement elements described herein consist of a set of longitudinally aligned reinforcing ribs. However, the presented container remains unable to achieve the material reduction which is sought here, essentially of the wall. Similarly, such longitudinal ribs do not contribute significantly to counteracting sufficiently the deformation of the body wall under the influence of the pressure action.

Similarly, document WO2005/071306 of KOLDYBAEV describes a pressure container made from semi-transparent composite material around which a more complex cage structure is fitted, which actually increases the overall weight and is therefore incompatible with the objective sought here. This pressure container thus uses an external cage which protects the pressure container against external influences. However, the cage does not increase the internal pressure resistance of the container, so that no contribution is provided to the presently sought solution of the technical problem.

The device described in DE 102006004120 of HYDAC Technology is not a packaging, but a hydraulic accumulator, which has a totally different function.

Document FR 2 852 301 of VALOIS SAS also describes a pressure container which is equipped nowhere with mechanical reinforcements. It essentially involves a pressure container made from high-quality plastic material with sufficient resistance to the propellant gas which is intended to prevent the known disadvantages of metal containers, i.e. basically the difficulty to obtain specific shapes of containers at reasonable prices and also with regard to environmental considerations, as well as the possible impact on the contents of the container.

The pressure container described in US. 2.799.435 of ABPLANALP is made only from nylon. However, nylon is not suitable as a material for a pressure container, due to the significant moisture absorption and hydrolysis sensitivity. This is therefore restricted entirely to a nylon container in which a number of characterising technical specifications are described which are specific to the use of this material: this allows relatively thin walls, which are able nevertheless to resist the high pressures that are applied in pressure containers, but which has the disadvantage of quickly hardening, actually so quickly that nylon which is added in liquid form into the cavity has a tendency to solidify before the cavity is completely filled, with the drawback that the end products thus achieved are incomplete or imperfect. Said restrictions will not or must not occur in the present invention.

The pressure container described in US 5.133.701 of Han Sang is not provided anywhere with reinforcements, which are, however, necessary in order to provide the required resistance on the container wall that is subjected to a higher pressure.

Although EP 0778225 of L'OREAL describes an aerosol container that is also specifically intended for samples, the plastic pressure container is usable only for small volumes up to 8 ml as stated therein. A container made of plastic is thus proposed which is, however, regarded therein as an extremely expensive solution. At any rate, it is indicated herein that, due to the high internal pressure caused by the propellant gas, the use of a greater plastic thickness is required in order to allow the wall concerned to be provided with the required rigidity, thus providing an argument against this choice of plastic.

Finally, US 6.484.900 of Roy STINER et al. describes a transparent container intended for liquefied gas fuel, but the use of pressures is not disclosed at all therein. So this document does not cover a pressure container. A number of structural elements are described therein yet, which can best be used for the disclosed container, which is intended specifically as an energy source for a so-called 'camping gas' with an intrinsic and potential risk of explosion. Consequently, this container must be perfectly resistant to the high-risk contents comprising an explosive fluid, whereas in the applications considered here, only edible materials, cosmetics and other non-explosive fluids or discontinuous filling products notably are envisaged, and at any rate fluids which do not entail any risk of explosion. The basic conditions imposed on the container wall are thus totally different, which in the present case, is a determining factor given that, according to the present development, the aim is simply to be able to reduce the thickness of the body of the container as far as possible.

US4988399 discloses a method of producing a pair of container bodies. A cylindrical, hollow preform of a thermoplastic polymer material having a cylindrical body having a sidewall and an opened neck finish on each longitudinal end of the preform is provided. The preform is heated to a temperature above the glass transition temperature of the polymer and below the melting temperature of the polymer, and is stretched. The preform is stretched longitudinally by applying force to at least one of the ends, and is stretched transversely by introducing fluid pressure into the preform sufficient to form a stretch blown component having a first neck at one end and a second neck at the other end, and a body portion between the necks. The stretch blown component is separated transversely through the body to provide two container bodies, each having a neck finish corresponding dimensionally with the respective neck finish on the preform from which the container bodies are stretch-blown. The container bodies each have an open bottom end spaced longitudinally from the respective neck. A three-piece, biaxially oriented container is provided by attaching an end panel to the open bottom end of the container body and providing a mating closure onto the neck finish.

### Purpose of the invention

The object of the invention consists in a method for manufacturing a container which is intended for the packaging under pressure of a filling product.

### Summary of the invention

To achieve this aim, a method for manufacturing a container of the pressure container packaging type is proposed according to this invention, as defined in the main claim. It is remarkable in that said method comprises in a first step (A), a preform is extruded as a semi-finished product by injection molding, wherein plastic granules are dried, melted in an extruder and subsequently driven in an injection mold; in a subsequent step (B), said semi-finished product is blown in a blow mold to a bottle shape, in particular tubular, as a further intermediate product; and in a further next step (C) the bottom of said additional intermediate product is cut to a determined length, whereby a separately added injection molding base is then incorporated in said additional intermediate product.

The manufactured container is made from plastic and comprises at least a one end opening, in particular two, on the top and base sides of a sleeve forming the body of the container, the base side of which is closed by a specially added base, that is attached to said container body by means of a joint, and which is closed above with a closure. In addition, a set of reinforcement elements is provided at least on the body which makes the container resistant to high internal pressures.

According to a further preferred embodiment of the invention, a manufactured container made from plastic polymer is proposed, which is remarkable in that an inner container is provided in this container. Thus by means of such a double container system according to a more specifically defined embodiment of the invention, a particularly advantageous application consists in making a pressure packaging in an inner bottle, withstanding pressures ranging from 20 to 50 bar and more, possibly up to 100 bar, or even to 300 bar, so that, if a problem occurs within the container, the outer container will absorb everything, thereby acting as a kind of fuse safety container.

According to a quite remarkable embodiment of the invention, Pascal's law is applied, stating that a pressure exerted on a liquid present in a completely filled and enclosed vessel will be transmitted undiminished in all directions. This law is applied here to a pressure container comprising an inner container, wherein the latter container completely encloses the inner container as an actual global outer container. If the inner container is placed under a high pressure and the outer container under a lower pressure, wherein both pressures are higher than atmospheric pressure, the residual pressure on the inner container is equal to the difference between the high pressure of the inner container minus the lower (counter-)pressure of the outer container. This has the advantage that the inner container can be designed as lighter than would normally be expected to withstand the high pressure. Thanks to the constantly building counter-pressure in the outer container, the inner container can be designed as additionally thin and light.

According to a preferred embodiment of the invention, a reinforcement is implemented by incorporating an inner container which in turn is attached with a joint to the bottom, wherein this inner container under internal pressure is additionally supported by the container, wherein said inner container is joined to the latter by gluing or welding, possibly without a joint. The rings can be fixed by gluing or welding. One of the applications may thus consist in making a pressure packaging in an inner container being operational up to 20 bar, and even more, by means of a double container system, resulting in that the outer container acting as a fuse container, will take up anything going wrong within the former container.

According to an additional embodiment of the invention, a set of specific reinforcement elements is provided, which are placed at a distance from one another in order to make the container resistant to even higher internal pressures. By providing a set of reinforcement elements which are disposed at a distance from one another on the inside and/or outside respectively of the pressure container, these can be made resistant to increasingly higher internal pressures.

In particular, said reinforcement elements are obtained by winding and/or shrinking the film around the container. More particularly, said reinforcement elements comprise a set of inner support rings which are joined to the container.

According to an alternative embodiment thereof, reinforcement elements consist of a set of thickenings or reinforcement ribs directly in the material of the container; according to a further alternative of this embodiment, said reinforcing elements consist of a set of outer support rings, which advantageously can be directly fitted in the container blowing process; or according to a still further alternative embodiment thereof, said outer support rings can be replaced by a mesh and/or a grid and/or a shrink-wrap film with the grid already incorporated therein.

According to a specific embodiment thereof, said outer support rings are made of metal, wherein said outer or inner support rings can also be made from plastics.

According to a further advantageous embodiment of the pressure container according to the invention, one or both of the inner or outer containers is made transparent.

According to an advantageous embodiment of the invention, said plastic consists of PET (polyethylene terephthalate). However, it may also consist of a different plastic such as polyolefins, polyesters, PETG, PBT, etc. With an appropriate selection of plastics, unsuitable deformations can be more effectively kept under control. Materials which appropriately come into consideration consist of a different plastic, or polyolefins, particularly polypropylene or polyethylene, polystyrene, polyesters such as PETG or PBT, polycarbonate, polyamides and the like, or copolymers thereof, with the additional advantage that the material can be adapted to the requirements of the product, in particular a higher pressure resistance, possibly a higher chemical resistance, a higher temperature resistance. Various materials are thus proposed, providing a chemical reinforcement, which may advantageously be combined with said physical reinforcement, resulting in a measurable increase in the body strength.

According to a further embodiment of the pressure container according to the invention, it comprises at least one end opening, in particular two, on the top and base sides of a mantel or sleeve which forms the body of the container, the bottom side of which is closed by a separately added base which is attached to the body of the container by means of a joint and which is closed on top with a closure.

Another limitation is that they reveal creeping in the case of long-term stress on the plastic. However, this can be substantially remedied by a suitable selection of the plastics.

According to a further advantageous embodiment of the invention, the container originates from a preform made from a primary plastic material which is formed by a material which is bi-axially stretchable, particularly PET; more particularly, this is coated from the inside and, possibly, also from the outside, particularly with acrylics, possibly for the sake of using PET.

More particularly, it consists of a plastic, i.e. modified PET, such that it is resistant to an increasingly high(er) pressure and/or temperature.

According to a particular embodiment of the invention, said plastic is a so-called 'polymer bioaggregate' referred to as "PBA", particularly with the incorporation of a barrier herein, more particularly PETG with incorporated spores. Polymer bio-aggregates of this type are obtained through bioencapsulation in a polymer matrix, particularly applicable in the manufacturing process of an industrial product such as packaging material, textile fibres, granules and the like, where specific life stages and the polymer are agglomerated within a short time gap during which the polymer is fluid, i.e. at a temperature above its melting point.

According to a particular embodiment of the invention, a valve is incorporated into the added base of the container packaging.

According to a further embodiment of the invention, said joint comprises a glue joint, possibly also a seam joint or also a weld joint. More specifically, the weld joint may comprise a laser, induction or ultrasound joint.

According to a still further embodiment of the invention, a gas barrier is incorporated into one of the layers, particularly the intermediate layer, of the wall consisting of a barrier material with corresponding gas absorption; and/or wherein the additives have a neutralising effect on reagents with a disadvantageous influence on a product contained in the container with the formation of an active or passive barrier in the wall; and/or wherein the additives have a neutralising effect on gas formation originating from a degradation of said product; and/or wherein the additives have a neutralising effect on external substances, particularly oxygen and/or carbon dioxide, both under the formation of a relevant gas barrier in the wall; and/or wherein an oxygen barrier is incorporated into the container wall or preform wall by replacing the PET in one or more layers with a polyester barrier with oxygen absorption.

According to a further embodiment of the invention, the pressure packaging is formed by a multi-chamber system consisting of at least two chambers. In the case of such a bicameral system, the container is closed underneath as defined in the relevant sub-claim, and a chamber partition is fitted to create the different chambers in the container. In this case, the chamber partition can be provided with at least one pressure control valve or gassing valve. In particular, this pressure control valve may be a closure which can be indirectly opened from outside by means of the pressure control valve, so that the contents of the one chamber can come into contact with the other chamber, wherein the chambers may be under pressure or not, possibly wherein both the bottom and top sides are closed by means of the same closing piece, notably a closure, particularly wherein said cover consists of a dosing valve, or possibly a screw cap or other closures.

According to a particularly advantageous embodiment, the pressure container consists of a combined implementation of a double container as described above on the one hand, and a multiple chamber system on the other hand.

According to a particular embodiment of the method of the invention, a flexible inner container or bag is inserted into the container to prevent the filling product from coming into contact with the outer wall or with the pressure gas (gases, air), particularly wherein a flexible inner container is incorporated into the container by blowing.

The pressurisation therein can be performed through the closable lower valve via an opening which is self-closable by means of the seal, wherein this seal consists of a tube element which is made from a flexible plastic, particularly wherein the pressurisation therein can take place via the closable upper valve, notably via a so-called "umbrella plug" which is self-closable, or via a so-called "Nichelson plug".

More particularly, said container is made from a PET blend or copolymer with a different polyester resistant to a greater heat, particularly according to an extreme low level thereof, more particularly wherein said polyester is formed by a polyethylene naphthalate; a polytrimethylene naphthalate; or by the plastic material known as PETN-5 type 400105.

Further particularities and features of the invention are defined in further dependent claims. Further details are shown in the following for some embodiments of the invention with reference to the attached drawings. The same reference signs refer to identical or analogous elements herein.

### Brief description of the drawings

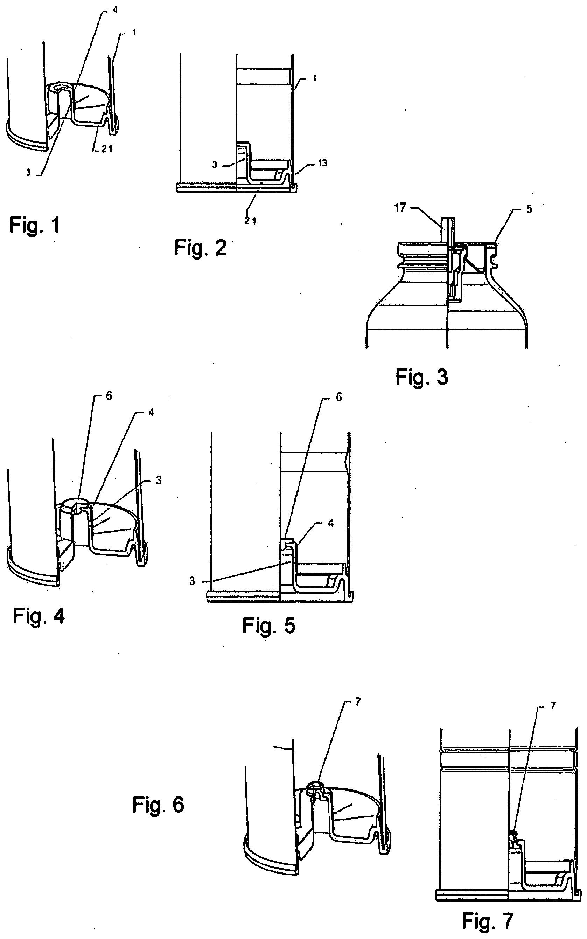

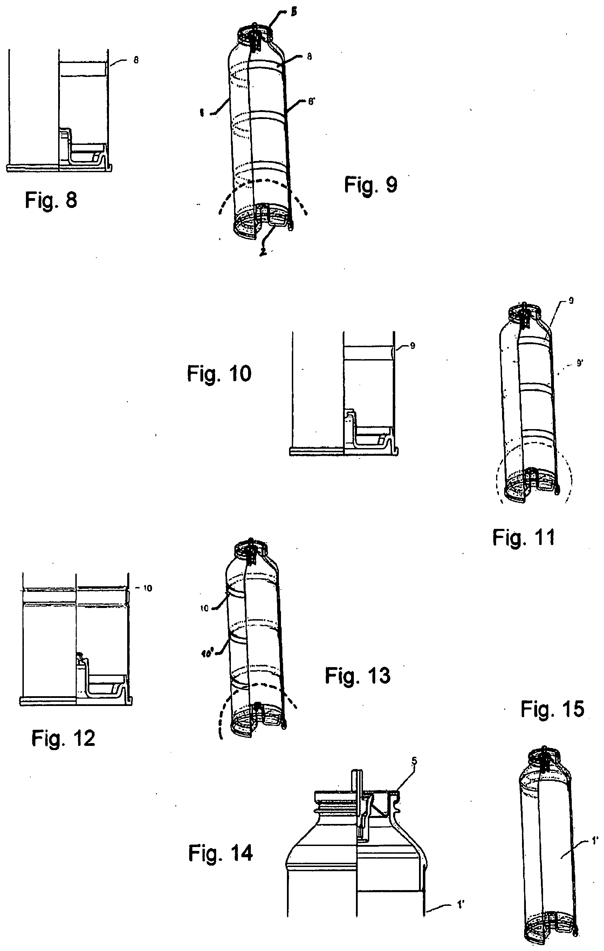

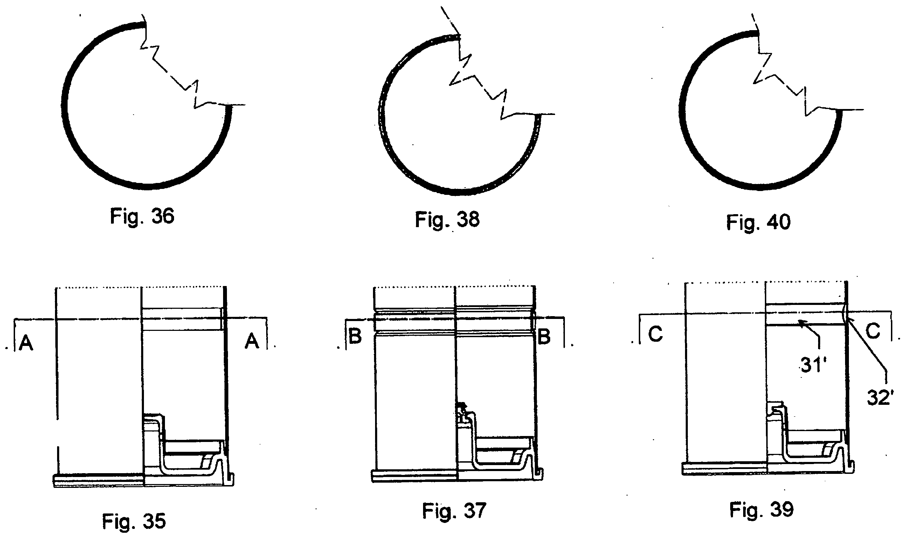

Figures 1 to 15 et seq. each show an embodiment of a container according to the invention, in each case with variants in several views, full and/or partial views, wherein
Fig. 1 shows a mixed combined view in perspective in partial cross section of the bottom section of a first embodiment of the container according to the invention;
Fig. 2 shows a completed side view of the representation of the embodiment of the container according to the invention represented in Fig. 1;
Fig. 3 shows a similar combined view of the embodiment of the container represented in both preceding Fig., but of a top portion thereof;
Fig. 4 shows a combined perspective view in partial cross-section of the bottom section of a second embodiment of the container according to the invention;
Fig. 5 shows a similar side view as the representation in Fig. 2, of the embodiment of the container according to the invention represented in Fig. 4;
Fig. 6 shows a similar view as in Fig. 1 but of a third embodiment of the container according to the invention;
Fig. 7 shows a similar side view of the representation in Fig. 5 of the third embodiment of the container according to the invention represented in Fig. 4;
Fig. 8 again shows a similar view as in Fig. 2 of a completed side view with regard to the detailed view according to Fig. 1, but of a fourth embodiment of the container;
Fig. 9 shows a further completed mixed side view in perspective of the complete container represented in the preceding Fig., but with a laterally removed longitudinal side portion thereof;
Fig. 10 and 11 show similar views again as in both preceding Fig. 8 and 9, but of a yet additional embodiment of the container according to the invention;
Fig. 12 and 13 show similar views again as in both Fig. 8 and 9, but of a still further embodiment of the container according to the invention;
Fig. 14 shows a similar top view as in Fig. 3, but of a still further embodiment of the container according to the invention, as represented sideways in Fig. 15.

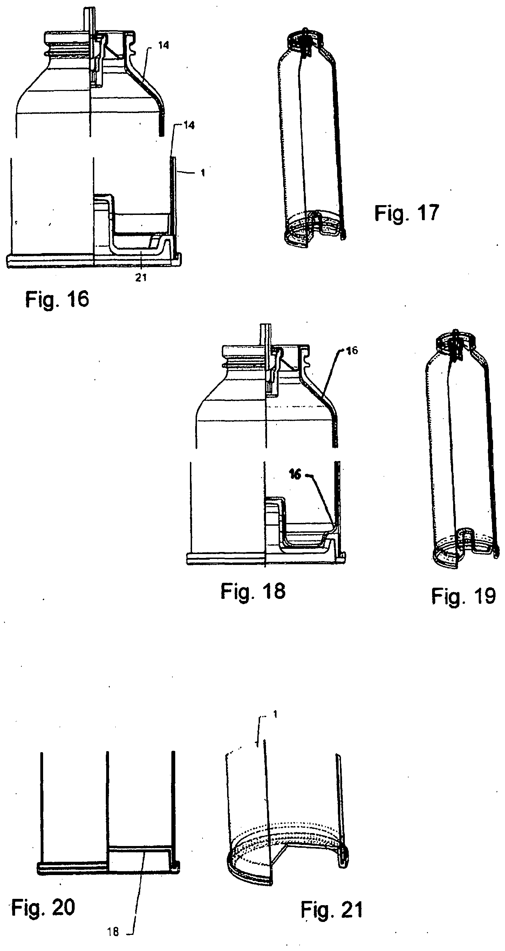

Fig. 16 shows a mixed similar representation of said bottom and top portions as represented in Fig. 2 and 3 respectively, of a still further embodiment of the container according to the invention;
Fig. 17 is a similar view as in Fig. 15 of the latter embodiment of the container as represented in the preceding Fig. 16;
Fig. 18 and 19 are similar representations of a still additional embodiment of the container as represented in both preceding Fig. 16 and 17, respectively;
Fig. 20 and 21 further represent similar partially cut-away bottom sections as shown in Fig. 5 and 4, respectively, of a yet additional embodiment of the container according to the invention;
Fig. 22 and 23 are similar representations as in both preceding Fig. 20 and 21, but of an additional embodiment of the container according to the invention with a multi-chamber system;
Fig. 24 and 25 are in turn similar views as in both Fig. 9 and 8, but with yet another floor finish represented in Fig. 25;

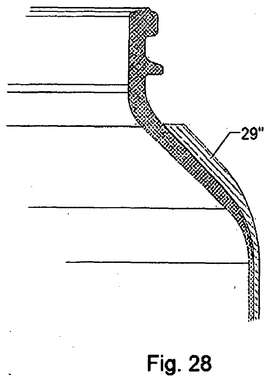

Fig. 26 and 27 show a still further embodiment of a container according to the invention, in which Fig. 28 is an enlarged detail view thereof;

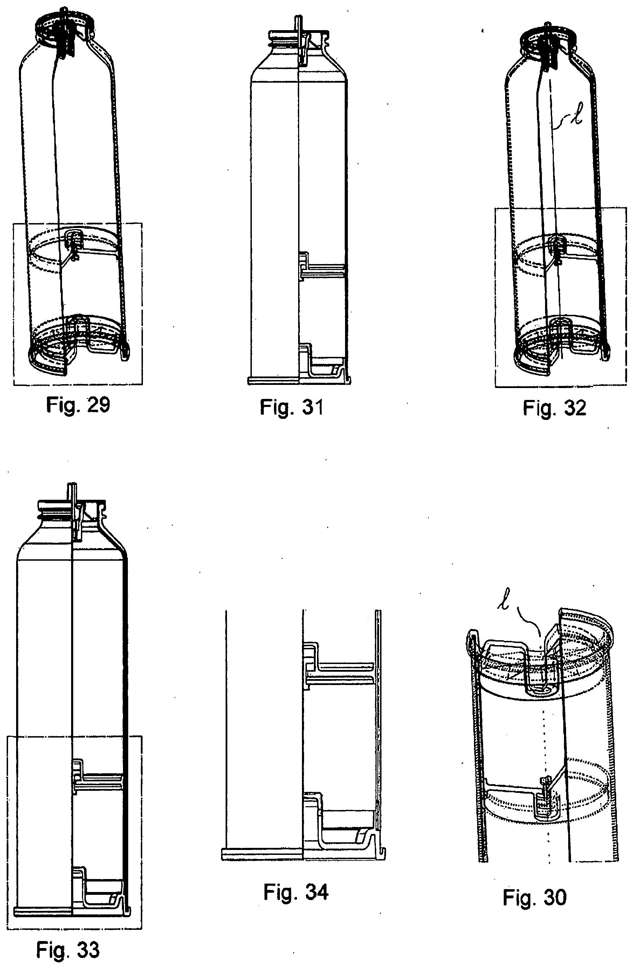

Fig. 29 shows a completed view of the container according to the invention represented in Fig. 23 with a two-chamber system;
Fig. 30 is an enlarged detail view of Fig. 29 similar to Fig. 23;
Fig. 31 shows a partial sectional view of said two-chamber system container as represented in the penultimate Fig. 29;
Fig. 32 shows a container as represented in Fig. 29, but according to an additional embodiment with double container system;
Fig. 33 is a similar representation as in the fore last Fig. of the double container with multi-chamber system according to the preceding Fig.;
Fig. 34 is an enlarged detail view of Fig. 32 analogous to Fig. 23.
Finally, Fig. 35 to 40 each show by pair a specific embodiment of particular embodiments of reinforced container walls according to the invention, each with different representations of reinforcement elements, each in a sectional view according to lines A-A, B-B and resp. C-C in the respective Fig. 35, 37 and 39.

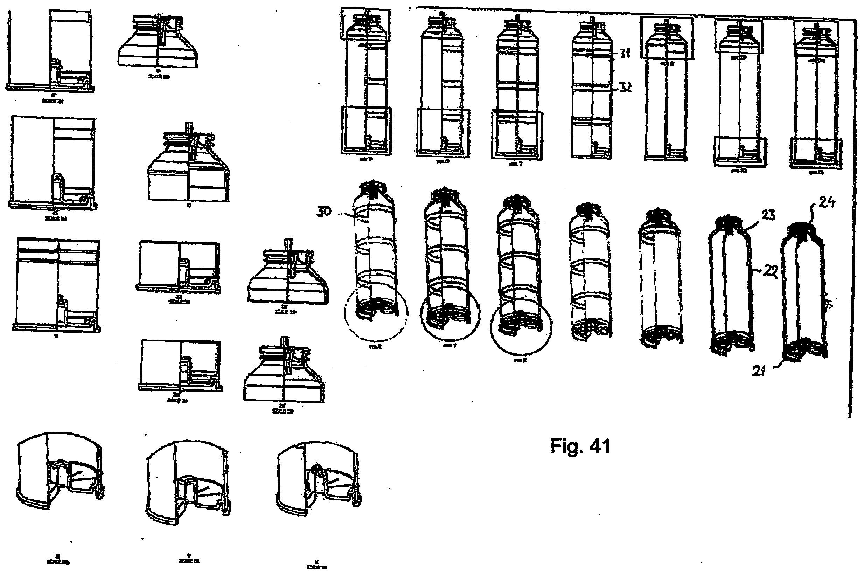

Fig. 41 represents a summary for synthetic variants of the various embodiments as set out above;

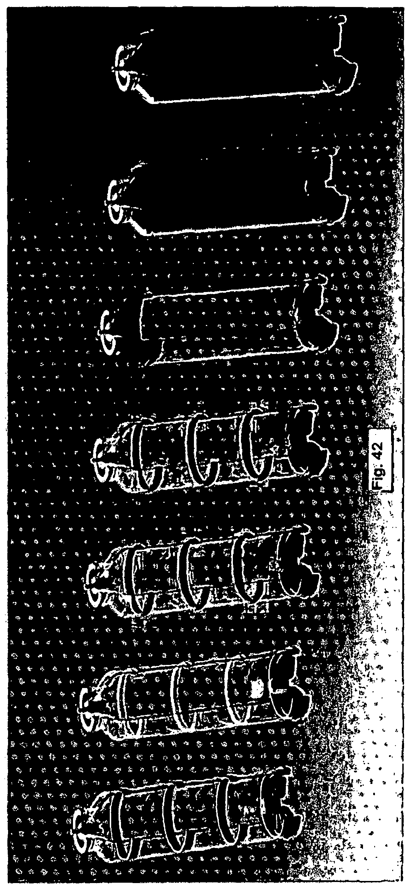

Fig. 42 represents a synthesized realistic view of a series of containers according to the invention.

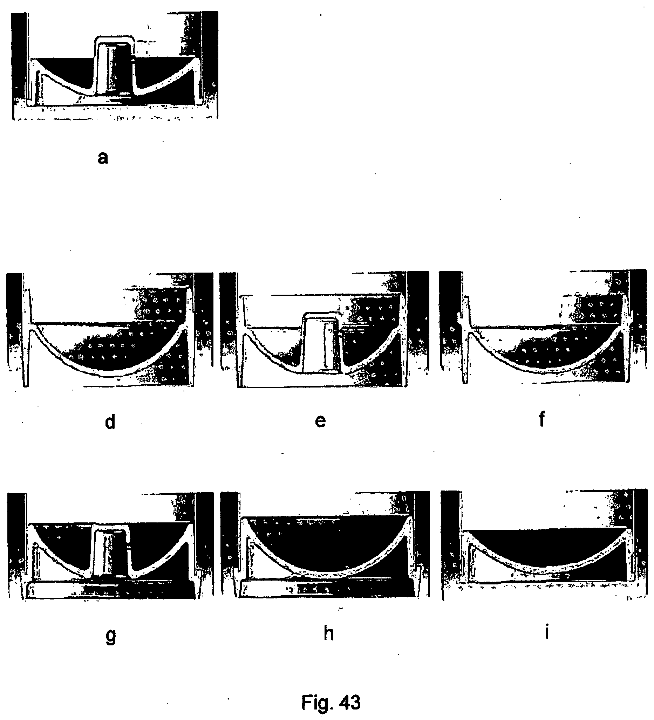

Fig. 43 represents a number of synthetic views of bottom portions represented realistically of said containers according to the invention.

### Description

Generally this invention relates to the manufacture of a pressurised container acting as a packaging with a top part, a central part and a bottom part, the top part whereof is provided with an opening through which the pressure container can be filled, and wherein a valve or closure can be incorporated, and the packaging is under pressure ranging up to about 20 bar and higher up to 100 bar, or even more up to 300 bar, particularly at a temperature of approx. 55°C.

The base part forms a separate component which is disposed underneath of the container, while it is provided with a valve in order to pressurise the container. The central part has, for example, a cylindrical or prismatic profile.

The pressure container is sealed at the bottom by a base 21 which is attached by means of a joint 13 to the container 1. The joint 13 can be obtained by means of gluing, seaming or welding. Or it is closed at the bottom by a closing cover base 18. Furthermore; the container 1 is closed with a cover 5, which may be a dosing valve 17 or a screw cap or another closure.

The container thus has a separately fitted base.

The primary container 1 comprises a substantially cylindrical body 22 extending along a longitudinal axis ℓ, a closure 5 at the top and an added base 21, which may take various shapes as set out below. The cylindrical body 22 is preferably made of plastic, in particular transparent, so that the level of filled product in the container remains visible to the user. This should be understood as including translucid, clear or just transparent walls. The particular material that is selected to form the body 22 must be chemically inert with regard to the filling product contained in the container, and must furthermore also provide sufficient strength and durability for the intended use, consisting in a pressure packaging of continuous or also discontinuous filling product.

Examples of suitable materials are given below. The cylindrical or prismatic body can be made, as further described below with the corresponding methods for manufacturing the container.
To give the pressure container wall 22 sufficient strength, reinforcement elements are provided at least in the wall 22 of the pressure container. These consist in the first instance of mechanical reinforcement elements 30, which can advantageously be provided in the form of peripheral reinforcement elements which are arranged around the container body wall 22. For a cylindrical wall, they are therefore circular rings which advantageously extend into an area extending perpendicularly to the longitudinal axis ℓ of the container thereby to make optimum use of the reinforcing effect of the ring on the wall.

Preferably, several reinforcing rings are provided along the container wall, which are disposed at a mutual distance from one another on the inner and/or outer side respectively of the pressure container, in particular according to an odd number, so that the middlemost ring can thus be appropriately fitted at the mid-height of the container wall 22, which is basically the most solicited area in the container, certainly if the reinforcement rings are provided at an equal distance from one another.

However, the reinforcement rings can also be fitted according to a different longitudinal distribution, particularly with a decreasing distance from the body top resp.bottom ends towards the central section thereof, wherein the intermediate spaces between consecutive reinforcement rings thus decrease towards the middle of the body. Indeed, this produces an increased strength in the most solicited section of the container, i.e. the mid-section.

The reinforcement elements 31, 32 advantageously have a rounded profile, particularly with a substantially semi-circular cross section with an outward-pointing top. Thanks to this profile pattern, the local tensions are combined in an optimum manner and are added together to exert a maximum tension in relation to the container wall, so that the tendency thereof to possibly bend or bulge outwardly is thus suppressed.

The reinforcement rings preferably have a width which remains smaller, preferably even significantly smaller, than half, or even less, of the spacing between the consecutive rings as shown in Fig. 39, so that the container wall thickness on average retains a relatively smaller value.

Said reinforcement rings are provided essentially on the outer wall, but can also be fitted to the inner wall, possibly in combination with those on the outer wall, for example in order to ensure the required wall strength, at least at the weaker points hereof.

Other types of ribs, such as longitudinal or radial ribs, are deliberately not used here. The efficiency hereof in terms of the non-deformation of the container wall under the influence of the acting pressure from the inside is at any rate significantly less indeed. Thus, the peripheral reinforcement ribs or rings, which extend into an area perpendicular to the longitudinal axis ℓ, are significantly more effective in counteracting a tendency to possible bulging of the container wall under the action of the pressure, which is only slightly or significantly less the case than for the other aforementioned types of reinforcement ribs. These reinforcement elements therefore serve to make the container resistant to high internal pressures. They can also be obtained by wrapping and/or shrinking the film around the container; by a set of inner support rings which are joined to the container.
Alternatively, said reinforcement elements may consist of a set of thickenings or reinforcement ribs directly in the material of the container; of a set of outer support rings which can advantageously be fitted directly in the container blowing process; by a mesh and/or a grid and/or a shrink-wrap film into which the grid has already been incorporated.

Possibly, said outer support rings may be made from metal, wherein said outer or inner support rings may be made from plastics as well.

A reinforcement is preferably implemented by inserting an inner container which in turn is attached with a joint to the base, wherein this inner container being under internal pressure is additionally supported by the primary container, wherein it is joined to said primary container by gluing or welding, possibly without a joint. The rings can be attached by gluing or welding.

An example easy to test consists of pressurizing the container, for example at 6 bar internally, measuring the deformation, add 2,5 bar along the top, and measuring the deformation again. Then, if said container needs to be able to withstand 6 bar, but if the container above is under 2,5 bar, the latter 2,5 bar pressure can be considered as acting in the opposite direction on the inner container, and consequently the pressure that the inner container has to withstand or that it actually feels about his wall is actually 3,5 bar, i.e. 6-2,5. The main application is that the inner container can be made lighter. Indeed, its wall must thus withstand only 3,5 bar so that the inner container no longer has to withstand 6 bar, resulting in that the walls may be thinner. An additional advantage of the double container thus follows from the application of Pascal's law, where an effect is obtained that a low pressure must be withstood for one of both containers thus involved, which may be quite useful in specific applications. Said inner container is therefore basically less stressed mechanically. This container can then also be made lighter. That is a significant advantage, i.e. that a lighter container can thus be made thanks to the counter-pressure created therein. In this example, the inner container serves as a pressure vessel, wherein the inner container under pressure actually protects its surrounding outer container, thereby actually acting as a counter-container: so said inner container exerts a negative pressure on the base container with a reduced pressure for the latter, i.e. in said double container system with a lower pressure for the one container, under the action of the other container.

In case of a bottle container, the bottle in a bottle is one chamber, wherein the inner bottle serves as an additional reinforcement of the outer bottle. An inner container is thus pressurised via a pressure regulator, whereby two different pressures are now controlled, with the creation of a pressure gradient ΔP, the difference between the inner container and the base container, which has a specific pressure difference, ΔP. By means of this ΔP, said inner container can be made lighter. This is this application of Pascal's law.

In addition to the mechanical reinforcement elements described above, chemical reinforcements may possibly be used as well, as described below. In order to achieve a cumulated reinforcement effect on the container wall, thereby significantly increasing the rigidity in regard to the acting pressure, said chemical reinforcement elements may be used possibly in combination with said mechanical reinforcement elements, resulting in a possible flawless reinforcement of the container wall, despite the pressure acting thereon.

The aim is at least to pressurise, notably to gas, the packaging with the filling product for packaging under pressure rising to approx. 20 bar and higher to 100 bar, or more, even up to 300 bar, particularly at a temperature of approx. 55°C, which occurs, inter alia, via the closable upper valve 17 and/or the closable lower valve via the opening 3, self-closable by means of the seal 4, wherein the seal 4 is a small tube made from a flexible plastic; and/or via said self-closable "umbrella plug" 6; or via said two-step "Nichelson plug" 7, both commercially available parts.
In order for the container 1 or 1' to be resistant to high internal pressures, the container is reinforced in a variety of ways: by means of inner support rings 8 and 8' which are positioned at a distance from one another and are joined to the container by e.g. gluing or welding. The distance between 8 and 8' and the amount of support rings to be positioned are dependent on the required container strength;
and/or by means of thickenings or reinforcement ribs 9 and 9' directly in the material of the container 1. The distance between 9 and 9' and the quantity thereof to be positioned are dependent on the required container strength;
and/or by means of external support rings 10 and 10' which are positioned at a distance from one another and are joined by gluing or welding or simply without a joint. The distance between 10 and 10' and the amount of support rings to be positioned are dependent on the required container strength. It is possible for these outer support rings 10 to be fitted directly during the container blowing process. The invention is not restricted to those outer support rings -the only shown-, but it may also be a mesh or a grid. The materials of these support rings may be both metals and plastics;
and/or by inserting an inner container 14 which in turn is attached with a joint to the base 21. The joint may, for example, be obtained by gluing, seaming or welding. This inner container 14 under internal pressure is then additionally supported by the container 1.

The container packaging 26 is remarkable in that it is manufactured according to a 3-step process: first a preform injection moulding, then blowing the preform by inflation to form a bottle and thereafter cutting it off. The container is closed underneath by a full cover 28 which is attached to the container by gluing or welding.

The container packaging is made from a PET material, wherein an inner container 14 is inserted through the opening underneath the outer container produced by said cutting. The inner container 14 is not necessarily made from the same material as the outer container and may have a shape which is not necessarily cylindrical. The lower opening of the outer container is closed via a cover or a base cup 25' which is attached to the container by gluing or welding. The inner container 14 is closed on top with a valve 5'. The wall of the inner container 14 is supported at a higher internal pressure by the outer container, as a result of which the container packaging as such is more resistant to higher pressures up to e.g. 20 bar.

The container packaging 29' is a variant of the outer container, wherein the valve 5' is integrated into the container packaging and is therefore no longer removable, insulated from the outside and as additional security for holding the valve through the inner wall of the outer container 29'. The container packaging 29" is a further variant of the outer container remarkable in that the outer container is cut off twice: on top and bottom.

The container packaging 14 has one end opening, i.e. it is not cut off at its bottom, and it is remarkable in that it consists of a plastic, in particular modified PET, so that it is resistant to high(er) pressures.
In the case of atmospheric packaging and/or pressure packaging, the container can be closed with a closing cover base 18, and can be pressurised or not according to the methods described above. This is referred to as a 1-chamber system.

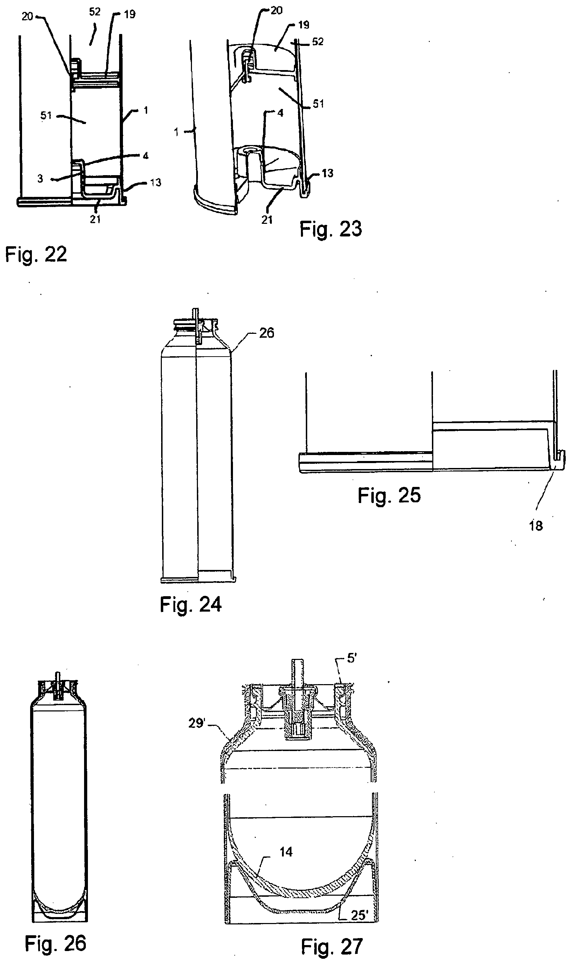

Fig. 22 shows a two-chamber system, wherein the container is closed underneath according to the various methods described above, and the two chambers are obtained by fitting a chamber partition 19 in the container. The chamber partition 19 may be provided or not with a pressure control valve 20, but this pressure control valve 20 may, for example, also be a closure which can be opened from outside, so that the contents of the chamber 51 may come into contact with the chamber 52. The chambers may be under pressure or not.

In a three-chamber or multi-chamber system (not shown) according to the invention above, one or more chamber partitions 19 and 19' are fitted. If only chamber partition 19' is fitted, a third chamber is obtained. The chamber partitions can be provided with a pressure control valve 20 or, for example, a closure which can be opened from outside so that the contents of the chamber 51 come into contact with the chamber 52. The chambers may be under pressure or not.

A number of chambers can be created by fitting different chamber partitions. In the different chambers, the filling product may consist of liquid, powder or gas. The chambers may be under pressure or not. The pressure packaging can thus be formed by a multi-chamber system consisting of at least two chambers, wherein, in the case of a two-chamber system, the container underneath is closed as specified and a chamber partition is fitted in order to create the different chambers in the container. In this case, the chamber partition can be provided with at least one pressure control valve or gassing valve. In particular, this pressure control valve may be a closure which can be indirectly opened from outside by means of the pressure control valve, so that the contents of the one chamber can come into contact with the other chamber, wherein the chambers may be pressurised or may not, possibly wherein both the base and top side are closed by means of the same closing piece, i.e. a closure, particularly wherein this cover consists of a dosing valve, or possibly a screw cap, or other closures.

This invention also relates to a pressure packaging multi-chamber system consisting of a container made from plastic, e.g. PET, formed by a one-step or two-step process 1, or a container formed by a one-step or two-step process followed by cutting of the container in order thus to obtain a tube.
The latter is closed underneath by a base 21 which is attached by means of a joint 13 to the container 1. The joint 13 may, for example, be obtained by gluing, seaming or welding. Or this is to be closed underneath by a closing cover base 18.
At the top, the container 1 is closed above with a cover 5, wherein this cover may be a dosing valve 17 or a screw cap or other closures.

In order to prevent a filling product such as liquids, pastes, creams and the like from coming into contact with the outer wall and also with the pressure gas (gases, air, etc.), a flexible inner container 16 is inserted into the container, for example by blowing.

This invention relates to a method for manufacturing a container packaging, particularly pressure container packaging as specified defined above, wherein the container used herein is formed by a one-step process with subsequent cutting of the container in order thus to obtain a tube, wherein pressure means are arranged herein to pressurise the container packaging with the filling product, particularly from atmosphere to approx. 100 bar, by gassing.
The pressurisation herein can be done through the closable lower valve via the opening which is self-closable by means of the seal, wherein this seal consists of a tube element which is made from a flexible plastic; particularly wherein the pressurisation herein takes place via the closable upper valve.

To summarise, the main cornerstones which are incorporated into the pressure container 1 of the invention are physical reinforcements, particularly foils, reinforcement rings and/or ribs, internal and/or external slots; and/or chemical reinforcements, particularly by increasing crystallinity, glass transition temperature, polymer blends, including use of PEN and increasing crystallinity; and/or chemical resistance, particularly by means of blends, coatings, including internal coating; and/or special construction types, particularly a pressure container of the 'bottle in a bottle' type as reinforcement, a 'bag in a bottle', a one-chamber or two-chamber system, or a 'spherical base with base cup'.

## Claims

1. A method for manufacturing a container (1) of the pressure container packaging type, said container being a container for packaging under pressure of a filling product continuum, including (semi-)liquid fluids, resp. discontinuous filling product such as foam, pastes, cream, or powders, comprising a neck section (23) with a pouring opening (24) on its top side, an adjacent sheathing section (22) forming the body of the container, and a bottom section (21) of the container, which is essentially composed of a plastic polymer, which is closable on said top section with a closure (5), wherein the bottom section (21) disposed opposite said top section is closed by a separately added bottom (21) which is attached to said body (22) by means of a joint (13), and said body (22) is provided with a set of reinforcements (30), said container body having a profile with a longitudinal axis (l) that is first formed with subsequent cutting hereof to form a tubular element to the required longitudinal dimension and wherein pressure means are arranged herein to pressurize the container (1) with the filled product, i.e. to pressure p1, by gassing, particularly wherein the container (1) is formed by means of the container body formed by the extrusion process, more particularly wherein the container head or body top section is closed with a cover (5), even more particularly wherein this cover is a dosing valve (17), a screw cap or another closure, **characterized in that** in a first step (A), a preform is extruded as a semi-finished product by injection molding, wherein plastic granules are dried, melted in an extruder and subsequently driven in an injection mold; in a subsequent step (B), said semi-finished product is blown in a blow mold to a bottle shape, in particular tubular, as a further intermediate product; and in a further next step (C) the bottom of said additional intermediate product is cut to a determined length, whereby a separately added injection molding base is then incorporated in said additional intermediate product (3).

2. The method according to claim 1, **characterized in that** connections (13) are performed by means of gluing, crimping or welding, in particular laser welding, induction, or ultrasonic welding.

3. The method according to claim 1 or 2, **characterized in that** a flexible inner container (16) or bag is inserted into the container for preventing the filling product to come in contact both with the outer wall, and with the pressure gas consisting of air or other gases.

4. The method according to the preceding claim, **characterized in that** a flexible inner container is introduced by blowing into the container (1) acting as main container.

5. The method according to the preceding claims, **characterized in that** the pressurization of filling product in said container (1) is done via the lockable bottom valve via an opening (3) that is self- closable by the seal (4), wherein the seal (4) consists of a tubular element made of a flexible plastic.

6. The method according to the preceding claim, **characterized in that** the pressurizing in said container (1) is done via the sealable top valve, in particular through a self-locking element, in particular a so-called "umbrella plug", or via a two-step element, in particular a so-called two-step "Nicholson plug" (7).

7. The method according to any of the preceding claims, **characterized in that** the reinforcements of said set of reinforcements (30) are physical reinforcements.

8. The method according to any of the preceding claims, **characterized in that** the reinforcements of said set of reinforcements (30) are chemical reinforcements.

9. The method according to any one of the preceding claims, **characterized in that** the reinforcement is implemented by incorporating an inner container, said inner container which in turn is attached with a joint (13) to the bottom, wherein the inner container under internal pressure is additionally supported by the container (1), wherein said inner container is joined to the latter by gluing for welding.

## Patentansprüche

1. Verfahren zum Herstellen eines Behälters (1) des Druckbehälter-Verpackungstyps, wobei der Behälter ein Behälter ist zum Verpacken eines Abfüllprodukt-Kontinuums unter Druck, einschließlich (semi-) flüssiger Fluide, beziehungsweise eines diskontinuierlichen Füllprodukts, wie Schaum, Pasten, Creme oder Pulver, mit einem Halsabschnitt (23) mit einer Ausgussöffnung (24) auf seiner oberen Seite, einem angrenzenden Mantelabschnitt (22), der den Körper des Behälters bildet, und einem Bodenabschnitt (21) des Behälters, welcher im Wesentlichen aus einem Kunststoffpolymer zusammengesetzt ist, welcher auf dem oberen Abschnitt mit einem Verschluss (5) verschließbar ist, wobei der dem oberen Abschnitt entgegengesetzt angeordnete Bodenabschnitt (21) durch einen separat hinzugefügten Boden (21) verschlossen ist, welcher an dem Körper (22) mittels eines Verbindungsstücks (13) angebracht ist, und wobei der Körper (22) mit einem Satz Verstärkungen (30) versehen ist, wobei der Behälterkörper ein Profil mit einer Längsachse (1) hat, die erst mit einem nachfolgenden Schneiden hiervon gebildet wird, um ein rohrförmiges Element in der erforderlichen Längsdimension zu bilden und wobei Druckmittel hierin angeordnet sind, um den Behälter (1) mit dem gefüllten Produkt unter Druck zu setzen, das heißt, auf einen Druck p₁ durch Gasieren, wobei insbesondere der Behälter (1) mit Hilfe des Behälterkörpers geformt wird, der durch den Extrusionsprozess gebildet wurde, wobei ganz bevorzugt der Behälterkopf oder Körperoberseitenabschnitt mit einer Abdeckung (5) geschlossen ist, wobei noch bevorzugter die Abdeckung ein Dosierventil (17), eine Schraubkappe oder ein anderer Verschluss ist, **dadurch gekennzeichnet, dass** in einem ersten Schritt (A) ein Vorformling als ein halbfertiges Produkt durch Spritzgießformen extrudiert wird, wobei Kunststoffkörnchen getrocknet, in einem Extruder geschmolzen und nachfolgend in ein Injektionsform geführt werden; in einem nachfolgenden Schritt (B) das halbfertige Produkt in einer Blasform zu einer Flaschenform geblasen wird, insbesondere rohrförmig, als weiteres Zwischenprodukt; und in einem weiteren nächsten Schritt (C) der Boden des zusätzlichen Zwischenprodukts auf eine vorbestimmte Länge geschnitten wird, wodurch eine separat hinzugefügte Spritzgießbasis dann in das zusätzliche Zwischenprodukt (3) eingebaut wird.

2. Verfahren nach Anspruch 1, **dadurch gekennzeichnet, dass** Verbindungen (13) mit Hilfe von Kleben, Quetschen oder Schweißen durchgeführt werden, insbesondere durch Laserschweißen, Induktions-oder Ultraschallschweißen,

3. Verfahren nach Anspruch 1 oder 2, **dadurch gekennzeichnet, dass** ein flexibler innerer Behälter (16) oder Beutel in den Behälter eingesetzt wird, um das Füllprodukt daran zu hindern, in Kontakt mit der Außenwand und mit dem aus Luft oder anderen Gasen bestehenden Druckgas zu kommen.

4. Verfahren nach dem vorhergehenden Anspruch, **dadurch gekennzeichnet, dass** ein flexibler innerer Behälter (16) durch Blasen in den als Hauptbehälter dienenden Behälter (1) eingeführt wird.

5. Verfahren nach den vorhergehenden Ansprüchen, **dadurch gekennzeichnet, dass** die unter Drucksetzung des Füllprodukts in dem Behälter (1) über ein örtliches Bodenventil über eine Öffnung (3) durchgeführt wird, dass durch die Dichtung (4) selbstverschließbar ist, wobei die Dichtung (4) aus einem Rohrelement aus flexiblem Kunststoff besteht.

6. Verfahrens nach dem vorhergehenden Anspruch, **dadurch gekennzeichnet, dass** das unter Druck Setzen in dem Behälter (1) über das dichtverschließbare Oberseitenventil durchgeführt wird, insbesondere durch ein selbstschließendes Element, insbesondere einen sogenannten "Schirmstopfen" (6), oder über ein zweistufiges Element, insbesondere einen sogenannten zweistufigen "Nicholson-Stopfen" (7).

7. Verfahren nach einem der vorhergehenden Ansprüche, **dadurch gekennzeichnet, dass** die Verstärkungen des Satzes von Verstärkungen (30) physische Verstärkungen sind.

8. Verfahren nach einem der vorhergehenden Ansprüche, **dadurch gekennzeichnet, dass** die Verstärkungen des Satzes von Verstärkungen (30) chemische Verstärkungen sind.

9. Verfahren nach einem der vorhergehenden Ansprüche, **dadurch gekennzeichnet, dass** die Verstärkung durch Einbauen eines inneren Behälters implementiert wird, wobei der Behälter, der wiederum mit einem Verbindungsstück (13) am Boden angebracht ist, wobei der innere Behälter unter innerem Druck zusätzlich durch den Behälter (1) abgestützt wird, wobei der innere Behälter mit letzterem durch Verkleben oder Schweißen verbunden wird.

## Revendications

1. Procédé de fabrication d'un récipient (1) du type emballage à récipient sous pression, ledit récipient étant un récipient pour emballage sous pression d'un continuum de produit de remplissage, en ce compris des fluides (semi-)liquides, resp. d'un produit de remplissage discontinu, tels que de la mousse, des pâtes, de la crème ou des poudres, comprenant une section de col (23) avec à son côté supérieur un orifice verseur (24), une section d'enveloppe adjacente (22) formant le corps du récipient, et une section de fond (21) du récipient qui est essentiellement constitué d'un polymère de matière plastique, qui peut être fermé à ladite section supérieure par une fermeture (5), dans lequel la section de fond (21) disposée à l'opposé de ladite section supérieure est obturée par un fond ajouté séparément (21) qui est fixé audit corps (22) au moyen d'un joint (13), et dans lequel ledit corps (22) est pourvu d'un ensemble de renforcements (30), ledit corps du récipient ayant un profil avec un axe longitudinal (ℓ) qui est formé d'abord avec découpe ensuite de celui-ci de façon à former un élément tubulaire à la dimension longitudinale requise et dans lequel des moyens de pressurisation y sont agencés pour pressuriser le récipient (1) avec le produit de remplissage, à savoir à la pression p₁, par gazage, en particulier dans lequel le récipient (1) est formé au moyen du corps de récipient formé par le processus d'extrusion, plus particulièrement dans lequel la tête du récipient ou la section supérieure du corps est fermée par un couvercle (5), encore plus particulièrement dans lequel ce couvercle est une valve doseuse (17), un bouchon fileté ou une autre fermeture, **caractérisé en ce que** dans une première étape (A), une préforme est extrudée sous la forme d'un produit semi-fini par moulage par injection, tel que des granulés de matière plastique sont séchés, fondus dans une extrudeuse et ensuite entraînés dans un moule à injection; dans une étape suivante (B), ledit produit semi-fini est soufflé dans un moule de soufflage en une forme de bouteille, en particulier tubulaire, en tant que produit intermédiaire supplémentaire; et dans une étape suivante additionnelle (C), le côté inférieur dudit produit intermédiaire supplémentaire est découpé à une longueur déterminée, un fond ajouté séparément moulé par injection étant incorporé ensuite dans ledit produit intermédiaire supplémentaire (3).

2. Procédé selon la revendication 1, **caractérisé en ce que** des liaisons (13) sont réalisées au moyen de collage, de sertissage ou de soudage, en particulier par soudage laser, induction ou soudage par ultrasons.

3. Procédé selon la revendication 1 ou 2, **caractérisé en ce qu'**un récipient interne flexible (16) ou sac est inséré dans le récipient pour empêcher le produit de remplissage d'entrer en contact tant avec la paroi extérieure, qu'avec le gaz sous pression consistant en air ou en autres gaz.

4. Procédé selon la revendication précédente, **caractérisé en ce qu'**un récipient intérieur souple (16) est introduit par soufflage dans le récipient (1) faisant office de récipient principal.

5. Procédé selon les revendications précédentes, **caractérisé en ce que** la mise sous pression du produit de remplissage dans ledit récipient (1) est effectuée par l'intermédiaire de la valve de fond verrouillable par le biais d'une ouverture (3) qui est fermée automatiquement par le joint d'étanchéité (4), tel que le joint (4) consiste en un élément tubulaire réalisé en une matière plastique souple.

6. Procédé selon la revendication précédente, **caractérisé en ce que** la mise sous pression dans ledit récipient (1) est effectuée par l'intermédiaire de la valve supérieure verrouillable, en particulier par un élément à verrouillage automatique, particulièrement celui dénommé "bouchon parapluie" (6), ou par l'intermédiaire d'un élément à deux pas, particulièrement celui dénommé "bouchon Nicholson" à deux échelons (7).

7. Procédé selon l'une quelconque des revendications précédentes, **caractérisé en ce que** les renforcements dudit ensemble de renforcements (30) sont des renforcements physiques.

8. Procédé selon l'une quelconque des revendications précédentes, **caractérisé en ce que** les renforcements dudit ensemble de renforcements (30) sont des renforcements chimiques.

9. Procédé selon l'une quelconque des revendications précédentes, **caractérisé en ce que** le renforcement est mis en oeuvre par l'incorporation d'un récipient interne, ledit récipient interne étant attaché au fond à son tour par un joint (13), le récipient interne sous pression interne étant en outre supporté par le récipient (1), ledit récipient interne étant relié à ce dernier par collage ou soudage.
